(19) Europäisches Patentamt
European Patent Office
Office européen des brevets

(11) EP 1 253 398 A1

## (12) EUROPEAN PATENT APPLICATION
published in accordance with Art. 158(3) EPC

(43) Date of publication:
30.10.2002 Bulletin 2002/44

(51) Int Cl.7: **G01B 9/02**, G01N 21/45

(21) Application number: 00980151.5

(86) International application number:
PCT/RU00/00482

(22) Date of filing: 27.11.2000

(87) International publication number:
WO 01/038821 (31.05.2001 Gazette 2001/22)

(84) Designated Contracting States:
AT BE CH CY DE DK ES FI FR GB GR IE IT LI LU
MC NL PT SE TR
Designated Extension States:
AL LT LV MK RO SI

(30) Priority: 29.11.1999 RU 99125095

(71) Applicant: Imalux Corporation .
Cleveland, Ohio 44114 (US)

(72) Inventor: Imalux Corporation .
Cleveland, Ohio 44114 (US)

(74) Representative: Spitz, Volker, Dr. et al
Spitz, Klinger & Partner GbR,
Bavariaring 20
80336 München (DE)

## (54) OPTICAL INTERFEROMETER (VARIANTS)

(57) The present invention relates to devices characterized by optical measurement means. This invention more precisely relates to optical interferometers being part of low-coherence reflectometers and optical coherence tomography apparatus. In one modification of the Michelson optical interferometer measuring and reference arms (5), (7) include respective polarization switches (9), (11). As a result the polarization direction of optical radiation passing through beam splitter (3) in a backward direction is orthogonal to the polarization direction of optical radiation passing through beam splitter (3) in a forward direction. Therewith, beam splitter (3) is designed polarization sensitive, the later allowing for setting the splitting ratio of beam splitter (3) for each of the polarizations on principle of providing highly efficient use of the optical power of source (1) and best signal-to-noise ratio. In another modification of the developed Michelson interferometer beam splitter (25) is designed non-reciprocal, i.e. its splitting ratios in the forward and backward direction can be chosen arbitrary. In one embodiment of this modification optical source (1) is polarized, in another embodiment an unpolarized optical source (23) is used. Implementation of the balanced reception technique in both modifications ensures highly efficient use of optical source power along with optimal signal-to-noise ratio.

FIG. 2

EP 1 253 398 A1

**Description**

Technical Field

This invention relates to devices characterized by optical measurement means, and can be used in apparatus for studying the internal structure of objects by optical means, namely in low coherence reflectometers and devices for optical coherence tomography applied, example, for medical diagnostics of individual organs and systems including *in vivo* diagnostics, as well as for industrial diagnostics such as control of technological processes.

Background Art

Optical interferometers being part of low coherence reflectometers and devices for optical coherence tomography, are well known. They are typically designed as a Michelson interferometer (see X.Clivaz et al., High resolution reflectometry in biological tissues, Optics Letters, vol.17. No. 1/Jan. 1, 1992, and also J.A.Izatt, J.G.Fujimoto et al., Optical coherence microscopy in scattering media, Optics Letters, vol.19. No. 8/Apr. 15, 1994, p.590-592) or as a Mach-Zender interferometer (see J.A.Izatt, J.G.Fujimoto et al., Micron-resolution biomedical imaging with optical coherence tomography, Optics & Photonics News, October 1993, vol. 4, No.10, p.14-19, and also USA Patent No 5582171, 1996).

Regardless of the specific design used, an optical interferometer typically comprises a short coherent length light source, one or two beam splitters, sampling and reference arms, and a photodetector connected to a processing and display unit. The sampling arm includes, as a rule, an optical measuring probe, the end of the reference arm being provided with a reference mirror (see A. Sergeev et al., In vivo optical coherence tomography of human skin microstructure, Proc. SPIE, v. 2328, 1994, p. 144, and also X.J.Wang et al., Characterization of human scalp hairs by optical low coherence reflectometry. Optics Letters, vol. 20, No. 5, 1995, pp. 524-526). For performing the in-depth scanning the reference mirror either is connected to a device for moving said mirror mechanically (U.S.Pat. No. 5,321,501, 1994; U.S.Pat. No. 5,459,570, 1995), or its position is fixed, in which case the in-depth scanning is performed with a piezoelectric scanning element (RU Pat. No. 2,100,787, 1997), or with a dispersion-grating optical delay line (K.F.Kwong, D.Yankelevich et al., 400-Hz mechanical scanning optical delay line, Optics Letters, vol. 18, No. 7, April 1, 1993). Sometimes the optical interferometer is fully or partially implemented by using bulk optic elements (U.S. Pat. No. 5,383,467, 1995), but more often optical interferometers for said application are made fiberoptic (U.S. Pat. No. 5,321,501, 1994; U.S. Pat. No. 5,459,570, 1995; U.S. Pat. No. 5,582,171, 1996).

One of the main problems to be solved in developing optical interferometers embodied in low coherence reflectometers and devices for optical coherence tomography, as well as in developing of almost any electronic instrumentation, is to provide maximum signal-to-noise ratio with highly efficient use of the source power. It is known that in the classical Michelson interferometer, embodied in devices for optical coherence tomography, a reciprocal beam splitter with a 3 dB splitting ratio is used to achieve maximum use of the source power. Optical radiation from the source passes through the beam splitter and the reference arm in the direct and backward direction and then returns to the beam-splitter. Thereafter, 25% of the power is transmitted to the photodetector, and 25 % goes back to the source of optical radiation (for the case when the power of optical radiation reflected from the sampling arm is negligible in comparison with the power of optical radiation reflected from the reference arm). It is evident that in such an interferometer 25 % of the source power is simply not used. In addition, special measures must be taken to protect the source of optical radiation. At the same time, the 25 % of the source power, which after the beam splitter enters the photodetector from the reference arm, is excessive from the point of view of providing maximum signal-to-noise ratio. Investigations show (W.V.Sorin, D.M.Baney, "A simple intensity noise reduction technique for optical low coherence reflectometry", IEEE Photon. Technol. Lett., vol. 4, No.12, pp. 1404-1406, 1992) that the maximum signal-to-noise ratio can be achieved at a certain, relatively low, power level in the reference arm. This calls for decreasing the power level in the reference arm by including special attenuators in said arm, which leads to still less efficient use of the source power.

A balanced detector is known to be used to increase signal-to-noise ratio in an optical interferometer for said application (H.-J. Foth et al. "Optical coherence tomography in turbid tissue: theoretical analysis and experimental results", Proc. SPIE, vol. 2628, pp 239-247, 1998). In this interferometer a first photodetector is connected to a beam splitter while a second photodetector receives a portion of the signal directly from a short coherent length light source. A disadvantage of this technical solution as well as of those considered above is that the power of the short coherent length light source is used ineffectively. In addition, this embodiment of the balanced detector allows only for compensation of redundant source noise by its cancellation, and therefore the signal-to-noise ratio in this interferometer is non-optimal.

In the optical interferometer known from the paper by W. Drexler et al. "*In vivo* ultrahigh-resolution optical coherence tomography", Opt. Lett., vol. 24, No. 17, pp. 1221-1223, 1999, there is implemented a somewhat different network for a balanced reception technique. This optical interferometer is embodied in a device for optical coherence tomography and is designed as a Michelson interferometer, comprising a source of low coherence linearly polarized optical radiation optically coupled to a first and second 3 dB reciprocal beam splitters, and to reference and sampling arms. The interferometer includes two photodetectors, the first photodetector being optically coupled to the first beam splitter, and the second photodetector being optically coupled to the second beam splitter. The outputs of the photodetectors are connected to respective inputs of a differential amplifier, whereas the output of the amplifier is connected to a processing and display unit. The end of the reference arm is provided with a reference mirror, moving of which ensures in-depth scanning. Lateral scanning of the sample is performed with a scanning device installed in the sampling arm. An interference signal is incident both on the first and second photodetectors, and therefore not only is the redundant optical source noise cancelled, but also the information-carrying interference signals are added together. Thus the balanced detector implemented in said optical interferometer provides for an increase in the signal-to-noise ratio in comparison with the optical interferometers where an interference signal is received using only one photodetector, as well as in comparison with the above-described optical interferometer of H.-J. Foth et al., where the balanced technique is used.

However, this optical interferometer is not efficient enough from the point of view of power utilization of the short coherent length light source, since two beam splitters with a splitting ratio of 3 dB are used. As a result, about 12.5 % of power returns back to the source. Besides, the power incident on the first and second photodetectors must be equalized, which further decreases the efficiency of use of the optical radiation source.

The optical interferometer according to A.M.Rollins, J.A.Izatt "Optimal interferometer designs for optical coherence tomography", Opt. Lett., vol. 24, No. 21, pp. 1484-1486, 1999 is designed as a Mach-Zender interferometer comprising a source of non-polarized optical radiation optically coupled to a first reciprocal beam splitter, a sampling and reference arm, a second reciprocal beam splitter, and a three-port circulator. The circulator is incorporated into the sampling arm, its first port being connected to the output of the first channel of the first beam splitter, the second port of the circulator being connected to the sample, and the third port of the circulator being connected to the output of the first channel of the second beam splitter. The reference arm includes a delay line. One end of the delay line is connected to the output of the second channel of the first beam splitter, and its other end - with the input of the second channel of the second beam splitter. The output of the first channel of the second beam splitter is optically coupled to the photodetector. The splitting ratios of the first and second beam splitters differ from 3dB. When modified, this embodiment allows for implementing the balanced reception technique. To achieve this, the optical interferometer additionally includes a second photodetector and a differential amplifier. The second photodetector is optically coupled to the output of the second channel of the second beam splitter, the outputs of the first and second photodetectors being connected to respective inputs of the differential amplifier. The splitting ratio of the second beam splitter is 3 dB.

The optical interferometer described in the paper by B.E.Bouma, G.J.Tearney "Power efficient, non-reciprocal interferometer and linear scanning fiber-optic catheter for optical coherence tomography", Optics Letters, vol. 24, No. 8, pp. 531-533, 1999, the same as the above-described interferometer in A.M.Rollins paper, is a Mach-Zender interferometer. It comprises a source of linearly polarized optical radiation optically coupled to a first beam splitter, sampling and reference arms, a circulator, a second beam splitter and a photodetector, its output being connected to a data processing and display unit. The reference arm comprises an in-depth scanner designed as a dispersion-grating delay line comprising a fixed reference mirror installed at the end of said arm. The first and second beam splitters are reciprocal and asymmetrical: the splitting ratios of the first and second beam splitters are 90 % : 10%, whereas 90 % of the power is routed to the sampling arm, and 10 % - to the reference arm. This arrangement, the same as the above-described optical interferometer according to the paper by A.M.Rollins et al., ensures an increase in efficiency of power use of the optical light source in comparison with known optical interferometers due to an increase in the optical radiation power directed to the sampling arm, and a high signal-to-noise ratio. The fact that most of the optical radiation does not return to the source is another advantage of said optical interferometer.

However, part of the power, having passed through the reference arm, still returns to the source. Besides, this interferometer does not allow for implementing a balanced technique and thereby does not provide optimal signal-to-noise ratio.

Another optical interferometer is described in the paper by A.M.Rollins et al. "Real-time in vivo imaging of human gastrointestinal ultrastructure by use of endoscopic optical coherence tomography with a novel efficient interferometer design", Optics Letters, vol. 24, No. 19, pp. 1358-1360, 1999, and in the paper by A.M.Rollins, J.A.Izatt "Optical interferometer designs for optical coherence tomography", Optics Letters, vol. 24, No. 21, pp. 1484-1486, 1999. Said optical interferometer comprises a source of optical radiation optically coupled to a three-port circulator, a reciprocal beam splitter, a sampling and reference arm, and a first photodetector, the output of the first photodetector being connected to a data processing and display unit. The reference arm includes an in-depth scanner designed as a dispersion-grating delay line with a fixed reference mirror at the end of said reference arm. A first port of the circulator is optically coupled to the optical source, a second port being optically coupled to a first port of the beam splitter, whereas a third port of the circulator is optically coupled to the photodetector. The second and third ports of the beam splitter are optically coupled to the sampling and reference arms, respectively. The splitting ratio of the beam splitter differs from 3 dB. Performance characteristics of this optical interferometer are close to those of the above-described interferometers comprising one photodetector known from the paper by A.M.Rollins et al. and the paper by B.E.Bouma et al.

A modification of this interferometer implements a balanced technique. Said interferometer additionally includes a second photodetector, which is optically coupled to a fourth port of the beam splitter, and a differential amplifier, its respective inputs being connected to the outputs of the first and second photodetectors. The splitting ratio of the beam splitter is set as 3 dB. Performance characteristics of this optical interferometer are close to those of the above-described optical interferometer known from the paper by A.M.Rollins et al., where the balanced technique is used.

A shortcoming of this optical interferometer, the same as of other known optical interferometers, is that it uses beam splitters with equal forward and backward transmission ratios for respective ports. Efficient use of optical source power together with a close to optimal signal-to-noise ratio is provided in these interferometers either by introducing additional beam splitters or adding a circulator. Besides, a disadvantage of a modification of said optical interferometer with the balanced reception technique is the inevitable loss of 25 % of power of the optical source, since in this design it is optimum to use a beam splitter with a splitting ratio of 3 dB.

Disclosure of invention

The object of the present invention is to expand the family of optical interferometers, which ensure highly efficient use of optical source power together with optimal signal-to-noise ratio, i.e., to provide modifications of optical interferometers with performance parameters, at least, not worse than those of the best optical interferometers known from prior art.

The first modification of the developed optical interferometer, similarly to the optical interferometer known from the paper by B.E.Bouma, G.J.Tearney "Power efficient, non-reciprocal interferometer and linear scanning fiber-optic catheter for optical coherence tomography", Optics Letters, vol. 24, No. 8, pp. 531-533, 1999, comprises a source of optical radiation linearly polarized in a first predetermined direction optically coupled to a beam splitter, a sampling arm, a reference arm with a reference mirror at its end, and a first photodetector, the output of the first photodetector being connected to a data processing and display unit. The splitting ratio of the beam splitter is other than 3 dB for optical radiation linearly polarized in the first predetermined direction.

Unlike the known optical interferometer, according to the invention it includes a first polarization switch which is placed in the sampling arm after the beam splitter and provides a change in the polarization direction of the optical radiation to a second predetermined direction, orthogonal to the first predetermined direction, said change occurring as a result of the optical radiation passing in a forward and backward direction through said polarization switch. The optical interferometer includes also a second polarization switch, which is positioned in the reference arm between the beam splitter and the reference mirror. The second polarization switch provides a change in the polarization direction of the optical radiation to a second predetermined direction, orthogonal to the first one, as a result of the optical radiation passing through said polarization switch in forward and backward directions. The beam splitter is designed polarization-sensitive.

In this embodiment it is preferable to set the splitting ratio of the beam splitter other than 3 dB for optical radiation linearly polarized in the second predetermined direction.

In another embodiment, the source of optical radiation linearly polarized in the first predetermined direction is optically coupled to the first port of the beam splitter via a polarizer additionally included in the optical interferometer. A first port of the polarizer is optically coupled to the source of optical radiation, a second port of the polarizer is optically coupled to a first port of the beam splitter, and a third port of the polarizer is optically coupled to an additionally included second photodetector. The outputs of the first and the second photodetectors are connected to the data processing and display unit via an additionally included differential amplifier, its appropriate inputs being connected to the outputs of the first and second photodetectors.

In this embodiment it is preferable to set the splitting ratio of the beam splitter equal substantially to 3 dB for optical radiation linearly polarized in the second predetermined direction.

In a different embodiment at least one of the polarization switches is designed as a Faraday element.

In another embodiment at least one of the polarization switches is designed as a quarter-wavelength plate.

In another embodiment at least one of the arms of the optical interferometer comprises an in-depth scanner having a capability to change the optical length of this arm by at least several tens of operating wavelengths of the interferometer.

In a different embodiment the sampling arm of the optical interferometer is provided with a probe installed at its distal end.

In a particular embodiment part of the sampling arm of the interferometer, which comprises the probe, is designed fiberoptic.

In another particular embodiment the first polarization switch is positioned at the distal end of the optical fiber probe.

In another embodiment, the sampling and reference arms of the optical interferometer are designed fiberoptic.

In a different embodiment the beam splitter is designed fiberoptic.

In a particular embodiment at least one of the arms of the optical interferometer comprises a polarization controller.

In another particular embodiment the optical fiber is polarization-maintaining.

In another embodiment, the optical interferometer is part of a device for optical coherence tomography, the source of linearly polarized optical radiation being a low coherent source, wherein the probe includes a lateral scanner.

The second modification of the developed optical interferometer, similarly to the optical interferometer known from the paper by A.M.Rollins et al. "Real-time *in vivo* imaging of human gastrointestinal ultrastructure by use of endoscopic optical coherence tomography with a novel efficient interferometer design", Optics Letters, vol. 24, No. 19, pp. 1358-1360, 1999, and the paper by A.M.Rollins, J.A.Izatt "Optical interferometer designs for optical coherence tomography", Optics Letters, vol. 24, No. 21, pp. 1484-1486, 1999, comprises a source of optical radiation optically coupled to a first port of a beam splitter, a second port of the beam splitter being optically coupled to a sampling arm, a third port of the beam splitter being optically coupled to a reference arm provided with a reference mirror at its end, and a first photodetector optically coupled to a fourth port of the beam splitter, the output of said first photodetector being connected to a data processing and display unit.

Unlike the known optical interferometer, according to the invention the beam splitter is designed non-reciprocal.

In one embodiment, the source of optical radiation is optically coupled to the first port of the beam splitter via an additionally included three-port isolator. A first port of the isolator is optically coupled to said source of optical radiation, a second port of the isolator is optically coupled to the first port of the beam splitter, and a third port of the isolator is optically coupled to an additionally included second photodetector. The outputs of the first and second photodetectors are connected to the data processing and display unit via an additionally included differential amplifier, whereas the photodetectors are connected to respective outputs of the differential amplifier.

In another embodiment the beam splitter is designed polarization-insensitive.

In a particular embodiment the beam splitter comprises positioned in series along the optical axis a first plane-parallel birefringent plate optically coupled to the first port of the beam splitter, an optically active element, a Faraday element, a second plane-parallel birefringent plate optically coupled to the second port of the beam splitter, a first polarizer optically coupled to the first plane-parallel birefringent plate via a first mirror, and a second polarizer optically coupled to the second plane-parallel birefringent plate via a second mirror. The second polarizer is the third port of the beam splitter, the first polarizer is the fourth port of the beam splitter, whereas the optical axes of the first and second plane-parallel plates are oriented towards each other, axially symmetric relative to the optical axis of the interferometer.

In this embodiment it is preferable to design the isolator as a circulator.

In a different embodiment the source of optical radiation is designed as a source of polarized optical radiation, the beam splitter being polarization-sensitive.

In a particular embodiment the beam splitter additionally comprises two polarization switches, each of the switches providing a change in a polarization direction of the optical radiation linearly polarized in a first predetermined direction, to a second predetermined direction, orthogonal to the first predetermined direction, said change occurring as a result of the optical radiation passing in a forward and backward direction through the polarization switch, wherein one of the polarization switches is the first port of the beam splitter, and the other polarization switch is the third port of the beam splitter.

In this embodiment it is reasonable to design the isolator as a polarizer.

In another embodiment at least one of the polarization switches is designed as a Faraday element.

In another embodiment at least one of the polarization switches is designed as a quarter-wavelength plate.

In a different embodiment at least one of the arms of the optical interferometer comprises an in-depth scanner having a capability to change the optical length of said arm by at least several tens of operating wavelengths of said interferometer.

In another embodiment the sampling arm of the optical interferometer is provided with a probe at its distal end.

In a particular embodiment part of the sampling arm of the interferometer, comprising the probe, is designed fiberoptic.

In a different particular embodiment the first polarization switch is installed at the distal end of the optical fiber probe.

In one embodiment the sampling and reference arms of the optical interferometer are designed fiberoptic.

In another embodiment the beam splitter is designed fiberoptic.

In a particular embodiment at least one of the arms of the optical interferometer comprises a polarization controller.

In a different particular embodiment the optical fiber is polarization-maintaining.

In another embodiment the optical interferometer is part of a device for optical coherence tomography, the source of linearly polarized optical radiation being a low coherent source, and the probe including a lateral scanner.

The nature of the invention will be evident from the following explanation.

In one of the modifications of the developed Michelson interferometer, the polarization direction of optical radiation, passing through the beam splitter in the backward direction is changed to an orthogonal polarization direction with respect to optical radiation that passes through the beam splitter in the forward direction. This change is provided by having appropriate polarization switches in the sampling and reference arms of the optical interferometer. The beam splitter is designed polarization-sensitive, i.e., having different splitting ratios for optical radiation polarized in two orthogonal directions. This allows for setting the splitting ratio of the beam splitter for each of the polarizations on principle of providing the best signal-to-noise ratio for a predetermined power of the source of optical radiation.

In another modification of the developed Michelson interferometer, the beam splitter is non-reciprocal, i.e., its splitting ratios in forward and backward directions may differ. In one embodiment of this modification there can be used a source of polarized optical radiation. In this case the non-reciprocal beam splitter is implemented by placing said polarization switches inside the beam splitter, their function being similar to that of polarization switches located in the sampling and reference arms of the above-described first modification. In another embodiment a source of non-polarized optical radiation can be used. In this embodiment the nonreciprocity of the beam splitter is provided by making use of the joint effect of the optically active element and the Faraday element on the optical radiation that passes through said elements in forward and backward directions. All that makes possible to set the splitting ratio of the beam splitter in forward and backward directions on principle of providing the best signal-to-noise ratio for a predetermined power of the optical radiation source.

The balanced reception technique implemented in the first and second modifications of the developed optical interferometer ensures an optimal signal-to-noise ratio.

Thus both modifications of the developed optical interferometer make possible to work out the problem set forth in the present invention, namely, to expand the family of optical interferometers, which ensure highly efficient use of optical source power together with optimal signal-to-noise ratio, i.e., to provide modifications of optical interferometers with performance parameters, at least, not worse than those of the best optical interferometers known from prior art.

Brief Description of Drawings

Fig. 1 is a schematic diagram of one particular embodiment of the first modification of the developed optical interferometer.

Fig. 2 is a schematic diagram of another particular embodiment of the same modification of the developed optical interferometer.

Fig. 3 is a schematic diagram of one particular embodiment of the second modification of the developed optical interferometer.

Fig. 4 is a schematic diagram of another particular embodiment of the second modification of the developed optical interferometer.

Fig. 5 is a schematic diagram of the third particular embodiment of the second modification of the developed optical interferometer.

Fig. 6 is a schematic diagram of the fourth particular embodiment of the second modification of the developed optical interferometer.

Fig. 7 displays dependences of the signal-to-noise ratio on the splitting ratio of the beam splitter for different modifications of the developed optical interferometer.

Modes for Carrying out the Invention

Developed modifications of the optical interferometer are illustrated by means of examples of optical fiber interferometers being part of a device for optical coherence tomography, although it is evident that they can be implemented with the use of bulk optic elements, and can be used as independent devices.

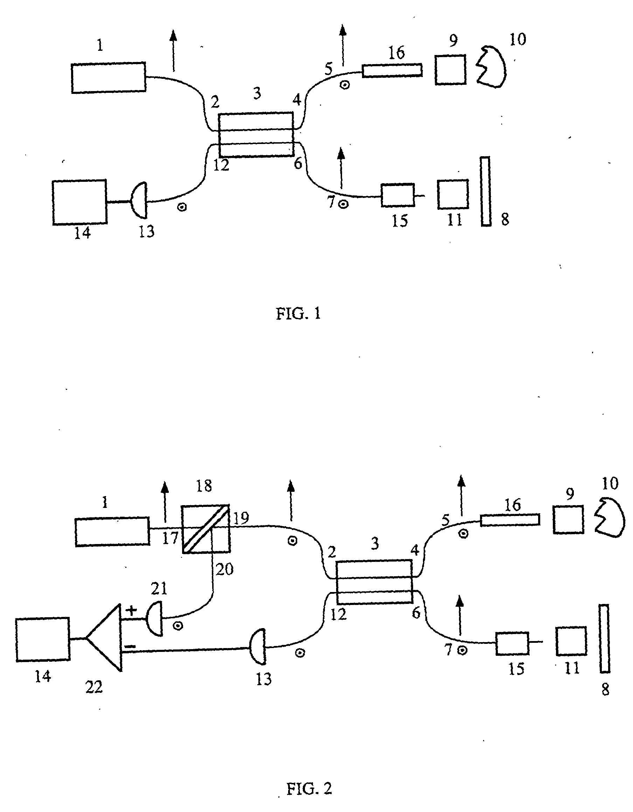

The optical interferometer of the invention, as depicted in Fig. 1, operates as follows.

The optical radiation linearly polarized in a first predetermined direction passes from a source 1 to a first port 2 of a beam splitter 3, source 1 being optically coupled to said port 2. Source 1 may be designed as a source of low coherence optical radiation, for example, as a superluminescent diode optically coupled to a polarizer and, when required, to a polarization controller. The splitting ratio of beam splitter 3 is other than 3 dB for optical radiation linearly polarized in a first predetermined direction. Beam splitter 3 is designed polarization-sensitive. That means that the splitting ratio of beam splitter 3 for optical radiation linearly polarized in a second predetermined direction differs from its splitting ratio for optical radiation linearly polarized in the first predetermined direction. In the particular embodiment the splitting ratio of beam splitter 3 is set other than 3 dB, for optical radiation linearly polarized in the second predetermined direction also. Therewith beam splitter 3 is designed reciprocal. In this particular embodiment the transmission ratio from first port 2 to a second port 4 of beam splitter 3, and from first port 2 to third port 6 for optical radiation linearly polarized in the first predetermined direction are $K_{12} = 0.97$ and $K_{13} = 0.03$, respectively. For optical radiation linearly polarized in the second predetermined direction the transmission ratio of beam splitter 3 from a third port 6 to a fourth port 12 is equal to the transmission ratio from second port 4 to first port 2, and the transmission ratio of beam splitter 3 from third port 6 to first port 2 is equal to the transmission ratio from second port 4 to fourth port 12, i.e., $K_{34} = K_{21} =$ 0.03 and $K_{31} = K_{24} = 0.97$.

Beam splitter 3 may be made fiberoptic, for example, according to the paper by R.H.Stolen et al. "Polarization-selective 3dB fiber directional beam splitter", Opt. Lett., vol. 10, No. 11,1985, pp. 574-575, where designs of fiberoptic beam splitters are described with splitting ratios both equal to 3 dB and other than 3 dB.

Since the splitting ratio of beam splitter 3 is other than 3 dB for optical radiation, linearly polarized in the first predetermined direction, being:

$K_{12} = 0.97$ and $K_{13} = 0.03$, then 97 % of optical radiation power from source 1 is rooted to a sampling arm 5, which is optically coupled to second port 4 of beam splitter 3. At the same time 3 % of optical radiation power from source 1 is rooted to a reference arm 7, which is optically coupled to third port 6 of beam splitter 3.

Sampling arm 5 is provided with an optical probe 16 at its distal end. Probe 16 comprises a transverse scanner (not shown in the drawing) and can be made according to RU Pat. No. 2,148,378 (RU patent application No. 98104238, WO 99/45338, published 10.09.99). Probe 16 focuses the radiation on a sample 10 and provides scanning of the optical radiation by a predetermined law over the surface under study, thereafter guiding the optical radiation scattered by sample 10 back to sampling arm 5. The optical radiation passes first in the forward and then in backward direction through a polarization switch 9, placed in sampling arm 5. Polarization switch 9 provides a change in the polarization direction of optical radiation, linearly polarized in a first predetermined direction, to a second predetermined direction, orthogonal to the first predetermined direction. Said change occurs as a result of the optical radiation passing in a forward and backward direction through polarization switch 9. Polarization switch 9 can be positioned in any part of sampling arm 5 after beam splitter 3. In the particular embodiment shown in Fig. 1 switch 9 is positioned at the distal end of sampling arm 5 immediately before sample 10.

At least one of the arms of the optical interferometer may comprise an in-depth scanner 15, having a capability to change the optical length of said arm by at least several tens of operating wavelengths of the interferometer. In the particular embodiment shown in Fig. 1, scanner 15 is located in reference arm 7. Thus, the optical radiation directed into reference arm 7 passes through scanner 15 to a polarization switch 11, placed in reference arm 7. Switch 11 may be positioned in any part of reference arm 7 between beam splitter 3 and a reference mirror 8, placed at the end of reference arm 7. In the particular embodiment shown in Fig. 1 switch 11 is positioned at the distal end of reference arm 7 just before reference mirror 8. Switch 11, similar to switch 9, is designed for changing the polarization direction of optical radiation linearly polarized in a first predetermined direction to a second predetermined direction, orthogonal to the first one, due to said optical radiation passing in a forward and backward direction through said switch 11. The optical radiation having passed through polarization switch 11 is incident on reference mirror 8 and reflected thereafter by reference mirror 8 to beam splitter 3. As a result, the polarization direction of the optical radiation, after it passes through polarization switch 11 in forward and backward directions, changes for orthogonal.

Switches 9 and 11 may be designed either as a Faraday element or as a quarter-wavelength plate. However, when the optical interferometer is implemented with using isotropic fiber, it is preferable to arrange switches 9 and 11 as a Faraday element, since this arrangement will allow compensation for all polarization distortions, including dynamical distortions.

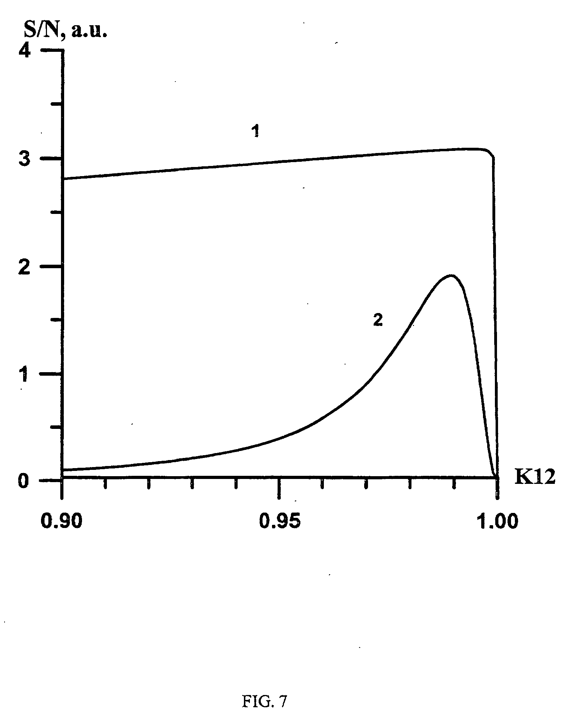

The optical radiation backscattered by sample 10 and linearly polarized in the second predetermined direction enters beam splitter 3, where it interferes with the optical radiation reflected by reference mirror 8, also linearly polarized in the second predetermined direction. Since beam splitter 3 is polarization-sensitive, then for the optical radiation linearly polarized in the second predetermined direction, $K_{21} \neq K_{12}$, $K_{31} \neq K_{13}$, and $K_{34} \neq K_{12}$. For example, for optical radiation linearly polarized in the second predetermined direction the transmission ratios can be the following: $K_{21} = K_{34} = 0.03$; $K_{24} = K_{31} = 0.97$. In this case, 97 % of the optical radiation power directed into reference arm 7, returns to source 1, which, considering the predetermined transmission ratio $K_{13} = 0.03$, gives 3 % of the power of source 1. In this case the power level in reference arm 7 is close to that at which a maximum signal-to-noise ratio is achieved. This is illustrated by dependence (2) in Fig. 7.

Scanner 15 provides a change in the difference between optical path lengths of sampling 5 and reference 7 arms of the optical interferometer with a constant velocity V by at least several tens of operating wavelengths of source 1. Scanner 15 may be designed, for example, according to RU Pat. No. 2,100,787, as an optical fiber piezoelectric transducer comprising at least one body which exhibits a high perpendicular inverse piezoeffect, and has an electric field vector when an electric field is applied to electrodes, which are mechanically connected with said body, whereas an optical fiber is rigidly fixed to said electrodes. A dimension of said piezoelectric body in a direction substantially perpendicular to said electric field vector is essentially larger than a dimension of said body in a direction substantially aligned with said electric field vector. The length of the optical fiber exceeds substantially the diameter of said piezoelectric body. Changing the difference in the optical lengths of arms 5 and 7 with in-depth scanner 15 leads to interference modulation of intensity of combined optical radiation at the output of beam splitter 3 at a Doppler frequency f= $2V/\lambda$, where $\lambda$ is the operating wavelength of source 1. The rule of interference modulation corresponds to the change in the intensity of optical radiation backscattered by sample 10 at different depths.

A first photodetector 13, arranged for example, as a photodiode, is optically coupled to port 4 of beam splitter 3 and provides for conversion of the combined optical radiation from the output of beam splitter 3 into an electrical signal. This signal passes to a data processing and display unit 14, which is connected to the output of first photodetector 13. Data processing and display unit 14 may be made, for example, similar to the data processing and display unit according to the paper by V.M. Gelikonov et al., "Optical coherent tomography of microinhomogeneities in biological tissues", JETP Letters, vol. 61, No. 2, pp. 149-153. This data processing and display unit comprises, connected in series: a band-pass filter, a log amplifier, an amplitude detector, an analog-to-digital converter, and a computer.

Band-pass filter of data processing and display unit 14 selects the signal at the Doppler frequency. The signal is then amplified and applied to an envelope detector, which selects a signal that is proportional to the envelope of the signal. The signal selected by the envelope detector of data processing and display unit 14 is proportional to the signal of interference modulation of intensity of the combined optical radiation. Analog-to-digital converter of data processing and display unit 14 converts the signal from the output of the envelope detector into a digital format. The computer of data processing and display unit 14 provides for acquisition of images by displaying on a video monitor the intensity of the digital signal (said displaying may be performed as described, for instance, in the paper by H.E.Burdick "Digital imaging: Theory and Applications", 304 pp., McGraw Hill, 1997). Since the digital signal corresponds to the change in intensity of optical radiation backscattered from sample 10 at different depths, the image displayed on the monitor corresponds to an image of sample 10.

When the optical interferometer is designed using bulk optic elements, part of sampling arm 5 of the optical interferometer, which comprises optical probe 16, may nevertheless be made of optical fiber. In this case probe 16 may be designed according to RU Pat. No. 2,148,378 (RU patent application No. 98104238/14, WO 99/45338, published 10.09.99).

The optical interferometer referred to in Fig. 2 operates as follows.

The optical radiation linearly polarized in a first predetermined direction passes from source 1 to a first port 17 of a polarizer 18, first port 17 being optically coupled to source 1. Polarizer 18 may be arranged as a dielectric mirror, or a polarization prism, or a wedge made of birefrigent material. Polarizer 18 may be made fiberoptic. The relation between the polarization direction of optical radiation from source 1 and the polarization direction of polarizer 18 is such that the optical radiation from the source 1 passes lossless to a second port 19 of polarizer 18 and then to first port 2 of beam splitter 3, beam splitter 3 being optically coupled to second port 19 of polarizer 18. Beam splitter 3, the same as in the optical interferometer shown in Fig. 1, is arranged polarization-sensitive. The splitting ratio of beam splitter 3 is other than 3 dB for optical radiation linearly polarized in the first predetermined direction, and in a particular embodiment is: $K_{12} = 0.95$ and $K_{13} = 0.05$. Therefore, 95 % of the power of optical radiation from source 1 will pass through beam splitter 3 to sampling arm 5, said sampling arm 5 being optically coupled to second port 4 of beam splitter 3. At the same time 5% of the power of optical radiation from source 1 passes to reference arm 7, said reference arm 7 being optically coupled to third port 6 of beam splitter 3. The same as in the optical interferometer shown in Fig. 1, the optical radiation rooted into sampling arm 5 passes through polarization switch 9, located in sampling arm 5, first in a forward direction and then, after being scattered by sample 10, in a backward direction. Thereafter the optical radiation passes to second port 4 of beam splitter 3. Switch 9 provides a change in the direction of polarization of optical radiation, linearly polarized in a first predetermined direction, to a second predetermined direction, orthogonal to the first one, said change occurring as a result of said optical radiation passing in a forward and backward direction through said switch 9. Switch 9 may be located in any part of sampling arm 5 after beam splitter 3. In the particular embodiment shown in Fig. 2, switch 9 is located at the distal end of sampling arm 5 immediately before sample 10.

Reference arm 7 includes polarization switch 11, which, similar to switch 9, provides a change in the polarization direction of optical radiation, linearly polarized in a first predetermined direction, to a second predetermined direction, orthogonal to the first one, as a result of the radiation passing through said polarization switch 11 in forward and backward directions. Switch 11 may be positioned in any part of reference arm 7 between beam splitter 3 and reference mirror 8. In the particular embodiment shown in Fig. 1, switch 11 is located at the distal end of reference arm 7 immediately before reference mirror 8.

The optical radiation passes through polarization switch 11 to mirror 8, placed at the end of reference arm 7, which reflects the optical radiation to beam splitter 3. After the optical radiation passes through polarization switch 11 in forward and backward directions, its polarization direction changes to orthogonal.

Beam splitter 3 then provides for an interference signal similar to that of the optical interferometer shown in Fig. 1. The only difference is that in the particular embodiment, the splitting ratio of beam splitter 3 is equal to 3 dB for optical radiation linearly polarized in a second predetermined direction. Hence, 50 % of the power of optical radiation reflected by reference mirror 8, i.e., 25 % of the power of source 1, passes via first port 2 of beam splitter 3 to second port 19 of polarizer 18. Said optical radiation is linearly polarized in the second predetermined direction, for which reason it passes via a third port 20 of polarizer 18 to a second photodetector 21, optically coupled to third port 20 of polarizer 18, and does not enter source 1. 50 % of the power of optical radiation reflected by reference mirror 8, i.e., 25 % of the power of source 1, passes via fourth port 12 of beam splitter 3 to first photodetector 13, which is optically coupled to fourth port 12 of beam splitter 3. It can be seen that the splitting ratio of beam splitter 3 for optical radiation polarized in the second predetermined direction is chosen such, that practically no equalizing is required for the power being delivered to first and second photodetectors 13 and 21. At the same time the splitting ratio of beam splitter 3 for optical radiation polarized in the first predetermined direction is chosen such as to meet the requirement for optimal signal-to-noise ratio. This is illustrated by dependence (1) in Fig. 7. A differential amplifier 22, to which the outputs of photodetectors 13, 21 are connected, provides for adding together information-carrying interference signals and cancellation of relative intrinsic noise of the optical radiation source 1. Further operation of the optical interferometer shown in Fig. 2 is the same as of the optical interferometer shown in Fig. 1.

Thus the balanced reception technique implemented in the optical interferometer shown in Fig. 2 ensures efficient use of the optical radiation power of source 1 along with optimal signal-to-noise ratio, as well as protection of source 1 from optical radiation passing in the backward direction through beam splitter 3.

In the optical interferometer, shown in Fig. 2, at least one of the arms of the optical interferometer may comprise an in-depth scanner 15, provided with a capability of varying the optical length of said arm by at least several tens of operating wavelengths of the interferometer. In the particular embodiment shown in Fig. 2 scanner 15 is located in reference arm 7, while sampling arm 5 is provided with probe 16 at its distal end. Source 1, beam splitter 3, polarization switch 9, polarization switch 11, photodetector 13, data processing and display unit 14, scanner 15, and probe 16 may be designed similar to those in the optical interferometer shown in Fig. 1. Photodetector 21 may be designed similar to photodetector 13.

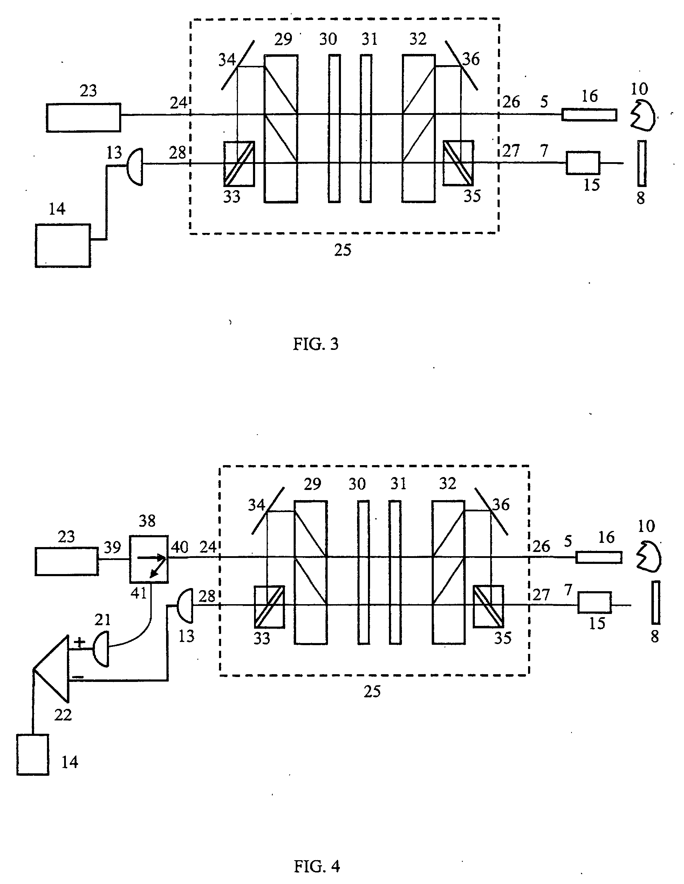

The operation of the optical interferometer shown in Fig. 3 is described for the case when a source 23 is designed as a source of non-polarized radiation.

The non-polarized optical radiation from source 23 is delivered to a first port 24 of a beam splitter 25, which is optically coupled to source 23. Beam splitter 25, whose second port 26 is optically coupled to sampling arm 5, and whose third port 27 is optically coupled to reference arm 7, provides for transmitting of this optical radiation to the sampling and reference arms 5, 7 in accordance with the predetermined splitting ratio. The later is achieved in the following way.

Beam splitter 25 is designed nonreciprocal. In a general case that means that the transmission ratios of beam splitter 25 in forward and backward directions for each port may differ. For definiteness, we will consider the case, when the splitting ratios of beam splitter 25 are other than 3 dB in forward and backward directions, whereas the transmission ratios for corresponding ports of beam splitter 25 are following:

$K_{12}$ = 0.97; $K_{13}$ = 1 - $K_{12}$ = 0.03;
$K_{21}$ = $K_{34}$ = 0.03; $K_{24}$ = $K_{31}$ = 0.97.

In the optical interferometer referred to in Fig. 3, beam splitter 25 is designed polarization-insensitive and comprises positioned in series on the optical axis a birefringent plane-parallel plate 29 optically coupled to first port 24 of beam splitter 25, an optically active element 30, a Faraday element 31, and a second birefringent plane-parallel plate 32 optically coupled to a second port 26 of beam splitter 25. It is preferable to have the first and second plane-parallel plates 29, 32 made of one uniaxial crystal. In the particular embodiment plane-parallel plates 29, 32 plates have the same thickness *d* and equal angles of birefrengence β. The optical axes of first and second plane-parallel plates 29, 32 are oriented towards each other, axially symmetric relative to the optical axis of the interferometer.

Beam splitter 25 also comprises a first polarizer 33, optically coupled via a first mirror 34 to first plane-parallel plate 29, and a second polarizer 35 optically coupled to second plane-parallel plate 32 via a second mirror 36. The reflecting plane of first polarizer 33 is parallel to the reflecting plane of first mirror 34, whereas the reflecting plane of second polarizer 35 is parallel to the reflecting plane of second mirror 36. The distance D between the reflection centers of first polarizer 33 and of first mirror 34, as well as between the reflection centers of second polarizer 35 and of second mirror 36 is defined by the following formula:

$$D = 2d\sin\beta/|\sin 2\alpha|,$$

where

*d* is the thickness of respective plane-parallel plate 29, 32;

β is the birefringence angle of respective plane-parallel plate 29, 32;

α is the angle between the normal to the reflecting plane and the direction of incidence of optical radiation on said plane (applicable to first polarizer 33 and second polarizer 35, as well as to first and second mirrors 34, 36).

The reflecting planes of first and second polarizers 33, 35 are oriented in such a way that polarizers 33, 35 transmit optical radiation with ordinary polarization and reflect optical radiation with extraordinary polarization. Second polarizer 35 is the third port 27 of beam splitter 25, while first polarizer 33 is a fourth port 28 of beam splitter 25.

First birefringent plane-parallel plate 29 splits the optical radiation into orthogonal linearly polarized ordinary and extraordinary optical radiation. First plane-parallel plate 29 transmits without changing the ordinary optical radiation to optically active element 30. Optically active element 30 is a plane-parallel plate made of optically active material, for example, crystalline quartz, cinnabar, etc., which rotates the polarization direction of any incident radiation component by a predetermined angle $\phi$, said angle being proportional to the thickness of the plane-parallel plate. The sign of angle $\phi$ changes with the optical radiation propagating through the plane-parallel plate in a forward and backward direction. Simultaneously plane-parallel plate 29 performs a parallel shift of the extraordinary optical radiation by a value of $h = d*\sin\beta$. The direction of said shift is determined by the orientation of the optical axis of first plane-parallel plate 29 relative to the optical axis of the interferometer. The extraordinary optical radiation, being shifted by said value, passes to optically active element 30. Optically active element 30 provides rotation of polarization directions of the ordinary and extraordinary radiation by a predetermined angle $\phi$. Then the ordinary and extraordinary optical radiations are incident on Faraday element 31. Faraday element 31 is used to rotate the polarization directions of all incident radiation components by a predetermined angle $\varphi$, whose sign does not change with the optical radiation propagating through Faraday element 31 in a forward and backward direction.

Concrete values of angles $\phi$ and $\varphi$ are determined by the values of transmission ratios for respective ports of beam splitter 25 in the forward and backward directions.

For predetermined transmission ratios:

$K_{12} = 1 - K_{13} = 0.97$ and $K_{21} = K_{34} = 1 - K_{31} = 1 - K_{24} = 0.03$, the values of angles $\phi$ and $\varphi$ can be found from the following relations:

$$\phi = 1/2\{arc\ cos\ (K_{12})^{1/2} + arc\ cos\ (1 - K_{12})^{1-2}\} = 45°$$

$$\varphi = 1/2\{arc\ cos\ (K_{12})^{1/2} - arc\ cos\ (1 - K_{12})^{1/2}\} \cong (-\ 35)°.$$

Thus, Faraday element 31 provides rotation of the polarization directions of the ordinary and extraordinary radiation by a predetermined angle $\varphi$, which is not equal to angle $\phi$. In the particular embodiment the sign of angle $\varphi$ is opposite to that of angle $\phi$ for the optical radiation passing in the forward direction. In this embodiment angle $\varphi$ is 45°. In this case the polarization direction of optical radiation after passing through Faraday element 31, differs from that of the ordinary optical radiation at the output of first plane-parallel plate 29 by an angle $\gamma$, which is equal to 10°. Hence the second birefringent plane-parallel plate 32 splits this optical radiation into linearly polarized orthogonal ordinary and extraordinary radiation. The ordinary radiation passes, without changes, through second plane-parallel plate 32 into sampling arm 5. Simultaneously, plane-parallel plate 32 provides a parallel shift of the extraordinary optical radiation by a value of $h = d*sin\beta$ in the direction that is opposite relative to the direction of the shift provided by first plane-parallel plate 29, since optical axes of first and second plane-parallel plates 29, 32 are oriented towards each other and axially symmetric relative to the optical axis of the optical interferometer. The extraordinary radiation, being shifted by said value, passes to second mirror 36. Second mirror 36 reflects this optical radiation to second polarizer 35, which directs this radiation to reference arm 7. At the same time the extraordinary optical radiation, having passed through optically active element 30 and Faraday element 31, is also incident on the second plane-parallel plate 32. The polarization direction of this optical radiation also differs from that of the extraordinary optical radiation at the output of first plane-parallel plate 29 by an angle $\gamma$, which is equal to 10°. Second plane-parallel plate 32 splits this optical radiation into linearly polarized orthogonal ordinary and extraordinary radiation. The ordinary optical radiation passes, without changing through second polarizer 35 to third port 27 of beam splitter 25 to be mixed with the extraordinary radiation, which has been reflected by second mirror 36. The extraordinary radiation is shifted by plane-parallel plate 32 by said value $h$ and then is incident on second port 26 of beam splitter 25 to be mixed with the ordinary optical radiation.

The optical radiation scattered by sample 10 is rooted to beam splitter *25,* where it interferes with the optical radiation reflected from reference mirror 8. The optical radiation scattered by sample 10 passes via second port 26 to second plane-parallel plate 32, which splits this optical radiation into linearly polarized orthogonal ordinary and extraordinary radiation. The ordinary optical radiation passes, without changing, via second plane-parallel plate 32 to Faraday element 31. Second plane-parallel plate 32 provides a parallel shift of the extraordinary optical radiation by a value of $h = d*sin\beta$, whereupon the extraordinary radiation is incident on Faraday element 31. Faraday element 31 rotates the polarization directions of ordinary and extraordinary radiations by a predetermined angle φ, which is approximately equal to *(-35)°*, i.e., said rotating is performed in the same direction as during the optical radiations passing through Faraday element 31 in the forward direction. Then the ordinary and extraordinary radiations arrive on optically active element 30. Optically active element 30 rotates the polarization directions of the ordinary and extraordinary radiations by an angle *(-ɸ)*, which is equal to *(-45)°*, i.e., while optical radiation passes through optically active element 30 in a backward direction, the sign of angle ɸ changes. Therefore, the polarization directions of optical radiations incident on first plane-parallel plate 29 in the backward direction differ from that of the ordinary and extraordinary optical radiations at the output of second plane-parallel plate 32 by an angle δ, which is not equal to angle γ, which the ordinary and extraordinary radiations acquire during their passing through optically active element 30 and Faraday element 31 in the forward direction. It is easily seen that angle δ is equal to *(-80)°*. The first plane-parallel plate 29 splits this optical radiation into linearly polarized orthogonal ordinary and extraordinary radiation. The ordinary optical radiation passes, without changing, through first port 24 of beam splitter 25 to source 23. The extraordinary optical radiation is shifted by mentioned-above value *h* and then passes to first mirror 34. First mirror 34 reflects this optical radiation to first polarizer 33, which directs this optical radiation to first photodetector 13. Simultaneously, the first plane-parallel plate 29 splits the second part of incident optical radiation into linearly polarized orthogonal ordinary and extraordinary radiation. The ordinary optical radiation passes without changes through first polarizer 33 to first photodetector 13 to be mixed with the extraordinary optical radiation that has been reflected by mirror 34. The extraordinary optical radiation is shifted by above-mentioned value *h* and then passes to source 23 to be mixed with the ordinary optical radiation.

In all other aspects the operation of the optical interferometer shown in Fig. 3 is similar to that of the optical interferometer shown in Fig. 1. When source 23 is arranged as a source of polarized radiation, the operation of the optical interferometer is similar to that described above.

Similar to the optical interferometers shown in Fig. 1 and 2, at least one of the arms of the optical interferometer shown in Fig. 3 can comprise an in-depth scanner 15, provided with a capability to change the optical length of said arm by at least several tens of operating wavelengths of the interferometer. In the particular embodiment shown in Fig. 3 scanner 15 is placed in reference arm 7, whereas sampling arm 5 is provided with probe 16 at its distal end.

In the optical interferometer, shown in Fig. 3, photodetector 13, data processing and display unit 14, scanner 15, and probe 16 may be designed similar to those in the optical interferometers shown in Fig. 1 and in Fig. 2. It is evident, that besides the one described above, other modifications of polarization-insensitive beam splitter 25 can be implemented as well.

The operation of the optical interferometer shown in Fig. 4 is described for the case when source 23 is designed as a source of non-polarized radiation, but it may be designed as a source of polarized optical radiation.

Non-polarized optical radiation from source 23 passes through a three-port isolator 37, arranged as a circulator 38 to beam splitter 25. A first port 39 of circulator 38 is optically coupled to source 23, whereas first port 24 of the beam splitter 25 is optically coupled to a second port 40 of circulator 38. Beam splitter 25 is designed similar to that of the optical interferometer of Fig. 3. Beam splitter 25 comprises, positioned in series along the optical axis, first birefringent plane-parallel plate 29, optically coupled to first port 24 of beam splitter 25, optically active element 30, Faraday element 31, and second birefringent plane-parallel plate 32, optically coupled to second port 26 of beam splitter 25. Beam splitter 25 comprises also first polarizer 33, optically coupled to first plane-parallel plate 29 via first mirror 34, and second polarizer 35, optically coupled to second plane-parallel plate 32 via second mirror 36. Second polarizer 35 is the third port 27 of beam splitter 25, and first polarizer 33 is the fourth port 28 of beam splitter 25.

The operation of beam splitter 25 in this optical interferometer is similar to the operation of beam splitter 25 in the optical interferometer shown in Fig. 3. In this optical interferometer there is implemented the balanced reception technique, and therefore the optical radiation, having passed in the backward direction to first port 24 of beam splitter 25, is incident on second port 40 of circulator 38. Said optical radiation passes through third port 41 to photodetector 21 and does not pass to source 23.

In all other aspects the operation of the optical interferometer shown in Fig. 4 is similar to that of the optical interferometer shown in Fig. 2.

Second port 26 of beam splitter 25 is optically coupled to sampling arm 5. Third port 27 of beam splitter 25 is optically coupled to reference arm 7, reference mirror 8 being placed at the end of arm 7. Fourth port 28 of beam splitter 25 is optically coupled to first photodetector 13, whereas third port 41 of circulator 38 is optically coupled to second photodetector 21. The outputs of first and second photodetectors 13, 21, respectively, are connected to data processing and display unit 14 via differential amplifier 22, whose respective inputs are connected to outputs of photodetectors 13, 21.

Thus the balanced reception technique implemented in the optical interferometer shown in Fig. 4 provides effective power use of source 23 along with optimal signal-to-noise ratio, as well as protection of source 23 from optical radiation transmitted in the backward direction through beam splitter 25.

At least one of the arms of the optical interferometer may comprise an in-depth scanner 15 having a capability to change the optical length of this arm by at least several tens of operating wavelengths of the interferometer. In the particular embodiment shown in Fig. 4, scanner 15 is placed in reference arm 7, whereas sampling arm 5 is provided with probe 16 at its distal end.

In the optical interferometer depicted in Fig. 4, source 23 is similar to source 23 in the optical interferometer shown in Fig. 3.

Photodetectors 13, 21, data processing and display unit 14, scanner 15 and probe 16 may be made similar to those in the optical interferometer shown in Fig. 2.

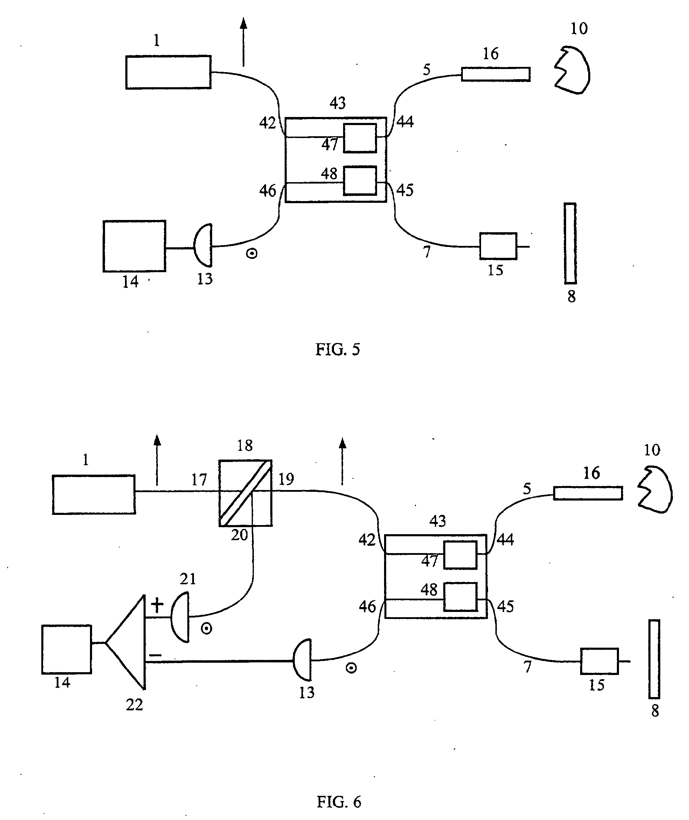

Referring to Fig. 5, an optical interferometer is shown, comprising source 1 of linearly polarized radiation, optically coupled to a first port 42 of a beam splitter 43, its second port 44 being optically coupled to sampling arm 5. A third port 45 of beam splitter 43 is optically coupled to reference arm 7, provided with reference mirror 8 at its end. A fourth port 46 of beam splitter 43 is optically coupled to first photodetector 13, whose output is connected to data processing and display unit 14. Beam splitter 43 is designed non-reciprocal and polarization-sensitive and comprises polarization switches 47 and 48. Each of said switches provides a change in the polarization direction of the optical radiation linearly polarized in a first predetermined direction to a second predetermined direction, orthogonal to the first predetermined direction. Said change occurs as a result of the optical radiation passing in a forward and backward direction through appropriate polarization switches 47 and 48. In the particular embodiment shown in Fig. 5 switch 47 is the second port 44 of beam splitter 43, whereas switch 48 is the third port 45 of beam splitter 43.

The operation of the optical interferometer shown in Fig. 5 is similar to that of the optical interferometer shown in Fig. 1, since polarization switches 47, 48 used in beam splitter 43 perform the same function as polarization switches 9, 11, which are situated, respectively, in sampling and reference arms 5, 7 of the optical interferometer.

In the optical interferometer shown in Fig. 6, source 1 is made similar to source 1 in the optical interferometer of Fig. 1. Photodetector 13, data processing and display unit 14, scanner 15 and probe 16 may be made as in optical interferometers shown in Fig. 1, in Fig. 2, in Fig. 3, and in Fig. 4.

Referring to Fig. 6, an optical interferometer in shown, which comprises source 1 of linearly polarized radiation and three-port isolator 37, which is designed as polarizer 18. First port 17 of polarizer 18 is optically coupled to source 1, the second port 19 of polarizer 18 is optically coupled to first port 42 of beam splitter 43, whereas the second port 44 of beam splitter 43 is optically coupled to sampling arm 5. Third port 45 of beam splitter 43 is optically coupled to reference arm 7, which is provided with reference mirror 8 at its end. Fourth port 46 of beam splitter 43 is optically coupled to photodetector 13, whereas third port 20 of polarizer 18 is optically coupled to second photodetector 21. The outputs of first and second photodetectors 13, 21, respectively, are connected to data processing and display unit 14 via differential amplifier 22, whose corresponding inputs are connected to the outputs of photodetectors 13, 21. In the optical interferometer shown in Fig. 6, beam splitter 43, similar to that of the optical interferometer depicted in Fig. 5, is non-reciprocal and polarization-sensitive, and comprises polarization switches 47 and 48. Each of said switches provides a change in the polarization direction of the optical radiation, linearly polarized in a first predetermined direction, to a second predetermined direction, orthogonal to the first predetermined direction. Said change occurs as a result of the optical radiation passing in a forward and backward direction through appropriate polarization switch 47 and 48, wherein switch 47 is the second port 44 of beam splitter 43, and switch 48 is the third port 45 of beam splitter 43.

The operation of the optical interferometer shown in Fig. 6 is similar to that of the optical interferometer shown in Fig. 1, since polarization switches 47, 48 used in beam splitter 43 perform the same function as polarization switches 9, 11, which are situated, respectively, in sampling and reference arms 5, 7 of the optical interferometer.

In the optical interferometer shown in Fig. 6 source 1 is similar to source 1 of the optical interferometer shown in Fig. 1. Photodetectors 13, 21, data processing and display unit 14, scanner 15 and probe 16 may be made similar to those of optical interferometers, shown in Figs. 1,2,3,4, and 5.

In any modification of the developed optical interferometer, where isotropic fiber is used, at least one of the arms of the interferometer comprises a polarization controller (not shown in the drawing). It is also possible to implement the optical interferometer using polarization-maintaining fiber, for example, PANDA-type. In this case the polarization controller is not required.

Fig. 7 illustrates the dependences of signal-to-noise ratio on splitting ratio of the beam splitter in developed modifications of the optical interferometer. Graph (1) demonstrates said dependence for an optical interferometer, in which balanced reception technique is implemented, whereas graph (2) is for an optical interferometer with one photodetector. The values of signal-to-noise ratio are normalized to those of an optimally adjusted arrangement of a standard Michelson interferometer with a 3 dB beam splitter. Said dependences are given for following parameters of an optical interferometer

source power P = 5 mW;
reception frequency F = 1 MHz;
central wavelength of the source $\lambda$ = 1.3 $\mu$m
source bandwidth - 50 nm

effective reception load resistance R = 400 kOhm
operating temperature T = 300 K.

Industrial Applicability

The invention can be used in apparatus for studying the internal structure of objects by optical means, namely in low coherence reflectometers and devices for optical coherence tomography applied, example, for medical diagnostics of individual organs and systems including *in vivo* diagnostics, as well as for industrial diagnostics such as control of technological processes. It should be noted that the invention can be implemented with using standard means.

**Claims**

1. An optical interferometer comprising a source of optical radiation linearly polarized in a first predetermined direction, said source being optically coupled to a first port of a beam splitter, a second port of said beam splitter being optically coupled to a sampling arm, a third port of said beam splitter being optically coupled to a reference arm provided with a reference mirror at its end, and comprising a first photodetector optically coupled to a fourth port of the beam splitter, the output of said photodetector being connected to a data processing and display unit, whereas a splitting ratio of said beam splitter is other than 3 dB for optical radiation linearly polarized in said first predetermined direction, **characterized in that** said optical interferometer comprises two polarization switches, each of said switches providing a change in a polarization direction of said optical radiation linearly polarized in said first predetermined direction to a second predetermined direction, orthogonal to said first predetermined direction, said change occurring as a result of said optical radiation passing in a forward and backward directions through said polarization switch, one of said polarization switches being placed in said sampling arm after said beam splitter, the other polarization switch being placed in said reference arm between said beam splitter and said reference mirror, wherein said beam splitter is designed polarization-sensitive.

2. An optical interferometer as claimed in claim 1, **characterized in that** a splitting ratio of said beam splitter is other than 3 dB for said optical radiation linearly polarized in said second predetermined direction.

3. An optical interferometer as claimed in claim 1, **characterized in that** said source of optical radiation linearly polarized in said first predetermined direction is optically coupled to said first port of said beam splitter via a polarizer additionally included in the optical interferometer, wherein a first port of said polarizer is optically coupled to said source of optical radiation, a second port of said polarizer is optically coupled to said first port of said beamsplitter, and a third port of said polarizer is optically coupled to an additionally included second photodetector, the outputs of said first and second photodetectors being connected to said data processing and display unit via an additionally included differential amplifier, whereas its respective inputs are connected to the outputs of said first and second photodetectors.

4. An optical interferometer as claimed in claim 3, **characterized in that** said splitting ratio of said beam splitter is equal substantially to 3 dB for said optical radiation linearly polarized in said second predetermined direction.

5. An optical interferometer as claimed in claim 1, or in claim 2, or in claim 3, or in claim 4, **characterized in that** at least one of said polarization switches is designed as a Faraday element.

6. An optical interferometer as claimed in claim 1, or in claim 2, or in claim 3, or in claim 4, **characterized in that** at least one of said polarization switches is designed as a quarter-wavelength plate.

7. An optical interferometer as claimed in claim 1, or in claim 2, or in claim 3, or in claim 4, or in claim 5, or in claim 6, **characterized in that** at least one of said arms of the optical interferometer comprises an in-depth scanner having a capability of changing the optical length of said arm by at least several tens of operating wavelengths of said interferometer.

8. An optical interferometer as claimed in claim 1, or in claim 2, or in claim 3, or in claim 4, or in claim 5, or in claim 6, or in claim 7, **characterized in that** said sampling arm is provided with a probe located at its distal end.

9. An optical interferometer as claimed in claim 8, **characterized in that** part of said sampling arm comprising said probe is designed fiberoptic.

10. An optical interferometer as claimed in claim 9, **characterized in that** said first polarization switch is positioned at the distal end of said optical fiber probe.

11. An optical interferometer as claimed in claim 1, or in claim 2, or in claim 3, or in claim 4, or in claim 5, or in claim 6, or in claim 7, or in claim 8, or in claim 9, or in claim 10, **characterized in that** said sampling and reference arms are designed fiberoptic.

12. An optical interferometer as claimed in claim 1, or in claim 2, or in claim 3, or in claim 4, or in claim 5, or in claim 6, or in claim 7, or in claim 8, or in claim 9, or in claim 10, or in claim 11, **characterized in that** said beam splitter is designed fiberoptic.

13. An optical interferometer as claimed in claim 11, or in claim 12, **characterized in that** at least one of said arms of the optical interferometer comprises a polarization controller.

14. An optical interferometer as claimed in claim 11, or in claim 12, **characterized in that** said optical fiber is polarization-maintaining.

15. An optical interferometer as claimed in claim 8, or in claim 9, or in claim 10, or in claim 11, or in claim 12, or in claim 13, or in claim 14, **characterized in that** said optical interferometer is part of a device for optical coherence tomography, said source of linearly polarized optical radiation being a low coherent source, and said probe including a lateral scanner.

16. An optical interferometer comprising a source of optical radiation optically coupled to a first port of a beam splitter, a second port of said beam splitter being optically coupled to a sampling arm, a third port of said beam splitter being optically coupled to a reference arm provided with a reference mirror at its end, and a first photodetector optically coupled to a fourth port of said beam splitter, the output of said first photodetector being connected to a data processing and display unit, **characterized in that** said beam splitter is designed nonreciprocal.

17. An optical interferometer as claimed in claim 16, **characterized in that** said source of optical radiation is optically coupled to said first port of said beam splitter via an additionally included three-port isolator, wherein a first port of said isolator is optically coupled to said source of optical radiation, a second port of said isolator is optically coupled to said first port of said beam splitter, and a third port of said isolator is optically coupled to an additionally included second photodetector, the outputs of said first and second photodetectors being connected to said data processing and display unit via an additionally included differential amplifier, whereas said photodetectors are connected to respective inputs of said differential amplifier.

18. An optical interferometer as claimed in claim 16 or in claim 17, **characterized in that** said beam splitter is designed polarization-insensitive.

19. An optical interferometer as claimed in claim 18, **characterized in that** said beam splitter comprises positioned in series along the optical axis a first plane-parallel birefringent plate optically coupled to said first port of said beam splitter, an optically active element, a Faraday element, a second plane-parallel birefringent plate optically coupled to said second port of said beam splitter, a first polarizer optically coupled to said first plane-parallel birefringent plate via a first mirror, a second polarizer optically coupled to said second plane-parallel birefringent plate via a second mirror, wherein said second polarizer is the third port of said beam splitter, said first polarizer is the fourth port of said beam splitter, and the optical axes of said first and second plane-parallel plates are oriented towards each other, axially symmetric relative to the optical axis of said interferometer.

20. An optical interferometer as claimed in claim 18, or in claim 19, **characterized in that** said isolator is designed as a circulator.

21. An optical interferometer as claimed in claim 16, or in claim 17, **characterized in that** said source of optical radiation is designed as a source of polarized optical radiation, wherein said beam splitter is designed polarization-sensitive.

22. An optical interferometer as claimed in claim 21, **characterized in that** said beam splitter additionally comprises two polarization switches, each of said switches providing a change in a polarization direction of said optical radiation linearly polarized in said first predetermined direction to a second predetermined direction, orthogonal to said first predetermined direction, said change occurring as a result of said optical radiation passing in a forward and backward direction through said polarization switch, wherein one of said polarization switches is the first port of said beam splitter, and the other polarization switch is the third port of said beam splitter.

23. An optical interferometer as claimed in claim 21, or in claim 22, **characterized in that** said isolator is designed as a polarizer.

24. An optical interferometer as claimed in claim 22, or in claim 23, **characterized in that** at least one of said polarization switches is designed as a Faraday element.

25. An optical interferometer as claimed in claim 22, or in claim 23, **characterized in that** at least one of said polarization switches is designed as a quarter-wavelength plate.

26. An optical interferometer as claimed in claim 16, or in claim 17, or in claim 18, or in claim 19, or in claim 20, or in claim 21, or in claim 22, or in claim 23, or in claim 24, or in claim 25, **characterized in that** at least one of said interferometer arms comprises an in-depth scanner having a capability of changing the optical length of said arm by at least several tens of operating wavelengths of said interferometer.

27. An optical interferometer as claimed in claim 16, or in claim 17, or in claim 18, or in claim 19, or in claim 20, or in claim 21, or in claim 22, or in claim 23, or in claim 24, or in claim 25, or in claim 26, **characterized in that** said sampling arm is provided with a probe at its distal end.

28. An optical interferometer as claimed in claim 27, **characterized in that** part of said sampling arm of the interferometer, comprising said probe, is designed fiberoptic.

29. An optical interferometer as claimed in claim 16, or in claim 17, or in claim 18, or in claim 19, or in claim 20, or in claim 21, or in claim 22, or in claim 23, or in claim 24, or in claim 25, or in claim 26, or in claim 27, or in claim 28, **characterized in that** said sampling and reference arms of the optical interferometer are designed fiberoptic.

30. An optical interferometer as claimed in claim 16, or in claim 17, or in claim 18, or in claim 19, or in claim 20, or in claim 21, or in claim 22, or in claim 23, or in claim 24, or in claim 25, or in claim 26, or in claim 27, or in claim 28, or in claim 29, **characterized in that** said beam splitter is designed fiberoptic.

31. An optical interferometer as claimed in claim 29, or in claim 30, **characterized in that** at least one of said interferometer arms comprises a polarization controller.

32. An optical interferometer as claimed in claim 29, or in claim 30, **characterized in that** said optical fiber is polarization-maintaining.

33. An optical interferometer as claimed in claim 27, or in claim 28, or in claim 29, or in claim 30, or in claim 31, or in claim 32, **characterized in that** said optical interferometer is part of a device for optical coherence tomography, said source of linearly polarized optical radiation being a low coherent source, and said probe including a lateral scanner.

FIG. 1

FIG. 2

FIG. 3

FIG. 4

FIG. 5

FIG. 6

FIG. 7

## INTERNATIONAL SEARCH REPORT

| International application No. |
| --- |
| PCT/RU 00/00482 |

**A.    CLASSIFICATION OF SUBJECT MATTER**

IPC 7:  G01B 9/02. G01N 21/45

According to International Patent Classification (IPC) or to both national classification and IPC

**B.    FIELDS SEARCHED**

Minimum documentation searched (classification system followed by classification symbols)

IPC 7:  G01B 9/02, G01N 21/41. 21/45, A61B 6/00

Documentation searched other than minimum documentation to the extent that such documents are included in the fields searched

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 86/06481 A1 (NAUCHNO-TEKHNICHESKOE OBIEDINENIE NAUK SSSR) 06 November 1986 (06.11.86) | 1-33 |
| A | US 5841536 A ( THE UNITED STATES OF AMERICA AS REPRESENTED BY THE DIRECTOR OF THE NATIONAL  SECURITY AGENCY ) Nov. 24. 1998 (24.11.98) | 1-33 |
| A | US 5491550 A ( COMMONWEALTH SCIENTIFIC AND INDUSTRIAL RESEARCH ORGANIZATION ) Feb. 13. 1996  (13.02.96) | 1-33 |
| A | US 5064289 A ( HEWLETT-PACKARD COMPANY ) Nov. 12. 1991  12.11.91) | 1-33 |
| A | RU 2102700 C1(LVOVSKY FILIAL KIEVSKOGO NAUCHNO-ISSEDOVATELSKOGO INSTITUTA GIDROPRIBOROV) 20 January 1998 (20.01.98) | 1-33 |

☐    Further documents are listed in the continuation of Box C.          ☐          See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 March 2001 (22.03.01) | 05 April 2001 (05.05.01) |

| Name and mailing address of the ISA/ | Authorized officer |
| --- | --- |
| RU | |
| Facsimile No. | Telephone No. |

Form PCT/ISA/210 (second sheet) (July 1992)

## INTERNATIONAL SEARCH REPORT

| International application No. |
| --- |
| PCT/RU 00/00482 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | US 5383467 A ( SPECTRASCIENCE. INC.) Jan. 24, 1995 | 1-33 |
| A | US 5582171 A ( INSIGHT MEDICAL SYSTEMS, INC.) Dec. 10, 1996 | 1-33 |

Form PCT/ISA/210 (continuation of second sheet) (July 1992)